# EUROPÄISCHE PATENTSCHRIFT

(11) **EP 3 094 847 B1**
(45) Veröffentlichungstag und Bekanntmachung des Hinweises auf die Patenterteilung: **31.01.2018**
(21) Anmeldenummer: 14802005.0
(22) Anmeldetag: 19.11.2014
(51) Int. Cl.: F16K 27/02, F02D 9/10, F16K 1/22

(54) **DROSSELKLAPPENSTUTZEN FÜR EINE BRENNKRAFTMASCHINE**
THROTTLE VALVE NOZZLE FOR AN INTERNAL COMBUSTION ENGINE
SUPPORT DE PAPILLON POUR MOTEUR À COMBUSTION INTERNE

(30) Priorität: 16.01.2014 DE 102014100466
(43) Veröffentlichungstag der Anmeldung: 23.11.2016
(73) Patentinhaber: Pierburg GmbH, 41460 Neuss (DE)
(72) Erfinder: SCHRÖDER, Thomas, 12589 Berlin (DE); HOBUSCH, Bastian, 12459 Berlin (DE); UHLENDORF, Ringo, 10715 Berlin (DE); BREHME, Thomas, 10409 Berlin (DE)
(74) Vertreter: Patentanwälte ter Smitten Eberlein-Van Hoof Rütten Partnerschaftsgesellschaft mbB
(86) Internationale Anmeldenummer: PCT/EP2014/075029
(87) Internationale Veröffentlichungsnummer: WO 2015/106857

(56) Entgegenhaltungen:
- DE-A1- 3 830 286
- DE-T2- 69 305 437
- US-A1- 2004 060 541
- US-A1- 2011 100 325

## Beschreibung

Die Erfindung betrifft einen Drosselklappenstutzen für eine Brennkraftmaschine nach dem Oberbegriff des Anspruchs 1.

Drosselklappenstutzen mit einer darin angeordneten Drosselklappe sind bekannt und werden in Fahrzeugen zur Regelung eines Verbrennungsmotors genutzt, insbesondere wird über die Stellung der Drosselklappe in dem Drosselklappenstutzen die Luftzufuhr des Verbrennungsmotors geregelt.

Aus der EP 1 063 404 B1 ist ein Drosselklappenstutzen bekannt, bei dem eine runde Drosselklappe in einer Schließposition an einer elliptischen Kontur einer Innenwand zur Anlage kommt. Dadurch ist ein Verschluss des Drosselklappenstutzens möglich, wobei an der Anlagefläche zwischen der Drosselklappe und der Innenwand ein erwünschter Leckluftspalt ausgebildet ist. Um für andere Betriebszustände der Brennkraftmaschine den Leckluftspalt zu minimieren, kann die Drosselklappe mit einem vorgegebenen Drehmoment bis zu einem "Eingraben" in Richtung der Schließposition weitergedreht bzw. in Richtung der Innenwandkontur vorgespannt werden. Dadurch ist ein relativ dichtes Schließen des Drosselklappenstutzens ermöglicht. Bei einem anschließenden Öffnen der Drosselklappe kann es jedoch zu einem ruckartigen Lösen der Drosselklappe von der Innenwandkontur kommen. Eine feine Regulierung des Öffnungswinkels ist daher nur begrenzt möglich. Zudem ist das Ausrichten und Justieren einer solchen Drosselklappe in Bezug auf die elliptische Innenwandkontur relativ aufwendig und dadurch zeit- und kostenintensiv.

Aus der US 2011/100325 A1 ist ein 3-Wege-Drosselventil mit einer elliptisch geformten Klappe bekannt, die zwischen einer ersten Endposition, in der eine einlassseitige Strömung gedrosselt wird, und einer zweiten Endposition, in der eine Umlenkung einer Strömung in einen Umgehungskanal erfolgt, gedreht werden kann. Eine den Einlasskanal vollständig verschließende Klappenstellung ist nicht vorgesehen.

Aus der US 2004/060541 A1 ist ein Drosselklappenstutzen bekannt, bei dem eine runde Drosselklappe in zwei Schließposition jeweils an einer einzigen kurvenförmigen Kontur einer Innenwand zur Anlage kommt. Eine solche für beide Schließpositionen geeignete Kurvenkontur erfordert jedoch - insbesondere zur Vermeidung eines "Eingrabens" der Klappe - eine sehr komplexe und präzise Ausgestaltung, so dass die Herstellung eines solchen Drosselklappenstutzens besonders zeit- und kostenintensiv ist.

Es stellt sich daher die Aufgabe, einen Drosselklappenstutzen mit einer darin angeordneten Drosselklappe bereitzustellen, mit dem sowohl ein dichtes Verschließen des Drosselklappenstutzens als auch eine feine Regulierung des Luftmassendurchsatzes ermöglicht ist. Darüber hinaus sollte der Drosselklappenstutzen eine kostengünstige Herstellung und Montage ermöglichen.

Diese Aufgabe wird durch die im kennzeichnenden Teil des Anspruchs 1 genannten Merkmale gelöst. Vorteilhafte Ausgestaltungen sind mit den Unteransprüchen angegeben.

In bekannter Weise umfasst der Drosselklappenstutzen für eine Brennkraftmaschine einen von einem Fluid durchströmbaren Kanal, der eine Einlassöffnung und eine Auslassöffnung aufweist. Seitlich begrenzt wird der Kanal von einer Innenwandfläche, die sich von der Einlassöffnung zu der Auslassöffnung erstreckt. Grundsätzlich ist die Strömungsrichtung in dem Kanal von der Einlassöffnung in Richtung der Auslassöffnung. In dem Kanal zwischen der Einlassöffnung und der Auslassöffnung ist eine drehbar gelagerte Drosselklappenwelle angeordnet. Die Drosselklappenwelle weist eine axiale Wellenachse auf, die grundsätzlich senkrecht in Bezug auf eine Kanalmittellinie sowie mittig in dem Kanal angeordnet ist. Alternativ kann die Drosselklappenwelle auch außermittig und/oder schräg in dem Kanal angeordnet sein. Die Drosselklappenwelle unterteilt den Kanal in Strömungsrichtung in einen Einlasskanalabschnitt, der sich von der Einlassöffnung zu der Drosselklappenwelle erstreckt, und einen Auslasskanalabschnitt, der sich von der Auslassöffnung zu der Drosselklappenwelle erstreckt.

Die Drosselklappe ist zentrisch mit der Drosselklappenwelle verbunden, so dass die Drosselklappenwelle die Drosselklappe in zwei gleichgroße Hälften unterteilt. Dadurch ist eine Drosselklappen-Oberhälfte und eine Drosselklappen-Unterhälfte definiert, wobei unter der Drosselklappen-Oberhälfte diejenige Hälfte der Drosselklappe zu verstehen ist, die in Richtung der Einlassöffnung des Kanals bzw. in dem Einlasskanalabschnitt angeordnet ist, und unter der Drosselklappen-Unterhälfte diejenige Hälfte, die in Richtung der Auslassöffnung bzw. in dem Auslasskanalabschnitt angeordnet ist.

In einer Offenposition ist die Drosselklappe längs der Strömungsrichtung angeordnet, das heißt, die Drosselklappenhälften liegen mit einer Flachseite parallel oder auf einer Kanalmittellinie. Dadurch kann in der Offenposition eine größtmögliche Durchströmung des Kanals von der Einlassöffnung zu der Auslassöffnung erreicht werden.

Zum Verschließen der Auslassöffnung gegenüber der Einlassöffnung ist die Drosselklappe in eine erste Drehrichtung in eine erste Sperrposition drehbar gelagert. An der Innenwand des Kanals ist eine erste Kurvenkontur ausgebildet, an der die Drosselklappe in der ersten Sperrposition entweder teilweise mit einem von der Drosselklappenwelle entferntest angeordneten Drosselklappenbereich oder vollständig umlaufend zur Anlage kommt. Die erste Kurvenkontur kann als eine um die Drosselklappenwellenachse ausgebildete Rundung in der Innenwandfläche des Kanals ausgebildet sein, an der die Drosselklappe in der ersten Sperrposition gleichmäßig und dicht anliegen kann. Um einen minimalen Grundluftdurchsatz in der ersten Sperrposition in Kombination mit einem fein regulierbaren Luftmassendurchsatz durch ein geringes Verdrehen der Drosselklappe aus der ersten Sperrposition heraus in die erste bzw. zweite Kurvenkontur zu erreichen, kann die Montage der Drosselklappe an die Drosselklappenwelle in der ersten Sperrposition erfolgen.

An der Innenwand ist eine zweite Kurvenkontur ausgebildet, an der die Drosselklappe in der ersten Sperrposition zusätzlich partiell oder vollständig anliegt. Die zweite Kurvenkontur kann - ähnlich oder gleich wie die erste Kurvenkontur - als eine um die Drosselklappenwellenachse ausgebildete Rundung in der Innenwandfläche des Kanals ausgebildet sein. Insbesondere kann die Kurvenkontur als eine schlauchförmige Einfassung zur Aufnahme der Drosselklappe ausgebildet sein und bildet in Kanalrichtung betrachtet eine elliptische Form. Die erste Kurvenkontur und die zweite Kurvenkontur bilden dadurch jeweils eine Dichtfläche aus, an der die Drosselklappe gleichmäßig zur Anlage kommen kann, Dadurch kann die Drosselklappe bei Anliegen an der ersten und zweiten Kurvenkontur den Kanal möglichst dicht verschließen. Die erste Kurvenkontur kann die gleiche bzw. spiegelverkehrte Form aufweisen wie die zweite Kurvenkontur; alternativ sind die zwei Kurvenkonturen in ihrer Form und/oder in ihrem Winkel in Bezug auf die Kanalmittellinie unterschiedlich ausgebildet.

Die Drosselklappe ist in einer zur ersten Drehrichtung entgegengesetzten zweiten Drehrichtung in eine den Kanal verschließende zweite Sperrposition drehbar. Dadurch ist die Drosselklappe in eine erste Richtung (linksdrehend) in die erste Sperrposition und in eine entgegengesetzte zweite Richtung (rechtsdrehend) in die zweite Sperrposition drehbar. In der zweiten Sperrposition kommt die Drosselklappe ebenfalls mit der Innenwand des Kanals in eine Anlage. Hierzu sind die Drosselklappe, die erste Kurvenkontur und die zweite Kurvenkontur derart zueinander angeordnet, dass bei einem Drehen der Drosselklappe in die erste Drehrichtung die Drosselklappe an die erste Kurvenkontur und an die zweite Kurvenkontur anschlägt und bei einem Drehen der Drosselklappe in die zweite Drehrichtung zwischen der Drosselklappe und den Kurvenkonturen jeweils ein Luftspalt ausgebildet ist. Dadurch kann die Drosselklappe in der zweiten Drehrichtung frei bzw. berührungsfrei an den für die erste Drosselklappen-Sperrposition optimal ausgelegten Kurvenkonturen vorbei gedreht werden und erst in einem Bereich zwischen der ersten Kurvenkontur und der zweiten Kurvenkontur oder eines dazwischen angeordneten Zylinderabschnitts der Innenwand zur Anlage kommen. Ein ,Durchdrehen' der Klappe um 360° ist nicht vorgesehen. Dazu ist die Drosselklappe durch die zwei Sperrpositionen bzw. durch die Kurvenkonturen und die Innenwand in der Bewegungsfreiheit bzw. Drehfreiheit begrenzt. Insbesondere kann die Drosselklappe in der ersten Sperrposition durch die Anlage einer Frontseitenkante der Drosselklappen-Oberhälfte an der ersten Kurvenkontur bzw. den schrägen Zylinderabschnitt und einer Rückseitenkante der Drosselklappen-Unterhälfte an der zweiten Kurvenkontur bzw. den schrägen Zylinderabschnitt bzw. in der zweiten Sperrposition durch die Anlage einer Rückseitenkante der Drosselklappen-Oberhälfte und einer Frontseitenkante der Drosselklappen-Unterhälfte an der Innenwand begrenzt sein. Dadurch kann in den Sperrpositionen jeweils eine geeignete, beispielsweise unterschiedliche, Verschlussdichtigkeit des Kanals erreicht werden. Grundsätzlich ist auch in der zweiten Sperrposition ein dichtes Verschließen der Auslassöffnung gegenüber der Einlassöffnung möglich. Alternativ kann das Anliegen der

Drosselklappe an der Innenwand in der zweiten Sperrposition im Vergleich zum Anliegen in der ersten Sperrposition weniger gleichmäßig sein. Dadurch kann das Verschließen der Auslassöffnung gegenüber der Einlassöffnung in der zweiten Sperrposition im Vergleich zur ersten Sperrposition weniger dicht und ein gewünschter geringer Leckluftstrom vorhanden sein. Die zweite Sperrposition der Drosselklappe kann beispielsweise für einen Leerlaufbetrieb der Brennkraftmaschine vorgesehen sein. Um einen minimalen Grundluftdurchsatz in der zweiten Sperrposition zu erreichen, kann die Montage der Drosselklappe an der Drosselklappenwelle in der zweiten Sperrposition erfolgen.

Erfindungsgemäß ist zwischen der ersten Kurvenkontur und der zweiten Kurvenkontur an der Innenwand ein zylinderabschnitt ausgebildet, unter einem Zylinderabschnitt ist ein umlaufender Innenwandbereich des Kanals zu verstehen, der eine in Strömungsrichtung des Kanals geradlinige Wand bzw. Innenkontur aufweist, nicht jedoch eine Rundung oder eine Kurvenkontur. Insbesondere kann der Zylinderabschnitt als ein in Strömungsrichtung ausgerichteter Zylinder verstanden werden. Der Zylinderabschnitt ist in Bezug auf die Kanalhauptachse schräg bzw. in einem Winkel ausgebildet. Dadurch erfolgt über die Länge des Zylinderabschnitts ein seitlicher Versatz des Kanals, wobei ein Durchströmungsquerschnitt bzw. ein Kanalinnenquerschnitt über die Länge des Zylinderabschnitts unverändert ist. Dadurch kann ein größtmöglicher Luftmassendurchsatz erreicht werden. Der Durchströmungsquerschnitt kann ein Querschnitt des durchströmbaren Kanalinnenraums senkrecht in Bezug auf die Kanalmittellinie sein. Ferner kann in der zweiten Sperrposition, in der die Drosselklappe vollständig an dem Zylinderabschnitt anliegt, ein "Verbeißen" der Drosselklappe in der Innenwand verhindert werden.

Vorzugsweise sind die erste Kurvenkontur in dem Einlasskanalabschnitt und die zweite Kurvenkontur in dem Auslasskanalabschnitt angeordnet.

Dadurch können die erste Kurvenkontur und die zweite Kurvenkontur vollständig unabhängig voneinander bzw. separat ausgebildet sein. In dieser Ausgestaltung kann die Drosselklappe mittig zwischen der ersten Kurvenkontur und der zweiten Kurvenkontur angeordnet sein. Dadurch kann ein besonders dichtes Verschließen des Kanals und eine sehr feine Regulierbarkeit der Drosselklappe ermöglicht werden. Vorzugsweise sind die erste Kurvenkontur sowie die zweite Kurvenkontur bzw. ein optional dazwischenliegender Zylinderabschnitt so ausgebildet ist, dass die Drosselklappe sowohl in der ersten Sperrposition als auch in der zweiten Sperrposition den Kanal relativ dicht verschließt. Die Kurvenkonturen sind jeweils an der Innenwand vorzugsweise in einer Ebene senkreckt zu der Kanalmittellinie vollständig umlaufend ausgebildet, nicht nur bereichsweise. Dadurch kann der Kanaldurchmesser über die Länge der Kontur im Wesentlichen unverändert sein, wodurch ein Luftdurchsatz in dem Kanal durch die Kontur im Wesentlich unbeeinflusst bleibt. Ferner kann die Herstellung der Kurvenkontur in relativ einfacher Weise erfolgen. Alternativ ist die Kurvenkontur in lediglich einem Teilbereich der Innenwand ausgebildet, nämlich in den Anlagebereichen der Drosselklappe, wodurch die zu bearbeitende Fläche verringert werden kann.

In einer ersten Ausgestaltung der Erfindung liegt die Drosselklappe in der ersten Sperrposition mit der Frontseitenkante der Drosselklappen-Oberhälfte an der ersten Kurvenkontur und des dazwischenliegenden schrägen Zylinderabschnitts und mit der Rückseitenkante der Drosselklappen-Unterhälfte an der zweiten Kurvenkontur und des dazwischenliegenden schrägen Zylinderabschnitts und in der zweiten Sperrposition mit der Rückseitenkante der Drosselklappen-Oberhälfte und der Frontseitenkante der Drosselklappen-Unterhälfte an der Innenwand bzw. an dem schrägen Zylinderabschnitt an.

In einer alternativen Ausgestaltung der Erfindung liegt die Drosselklappe in der zweiten Sperrposition an dem Zylinderabschnitt an. Dadurch können in der zweiten Sperrposition zusätzlich die Vorteile eines Kanalverschließens an einem zylindrischen Abschnitt genutzt werden, nämlich ein verstärkter Leckluftstrom bei kleinen Öffnungswinkeln der Drosselklappe. Durch die nahe Anordnung der zweiten Sperrposition in Bezug zu der ersten Sperrposition, nämlich in oder zwischen der ersten Kurvenkontur und der zweiten Kurvenkontur, können bei sehr kleinen Öffnungswinkeln der Drosselklappe zusätzlich die strömungstechnischen Vorteile der Kurvenkontur der ersten und zweiten Kurvenkontur auch in der zweiten Sperrposition für eine relativ feine Regulierung genutzt werden.

Vorzugsweise erstreckt sich der Zylinderabschnitt in Bezug auf die Kanalmittellinie über eine axiale Länge von 1 bis 10 mm. Dadurch kann die Drosselklappe in einem relativ breiten Bereich vollständig an dem Zylinderabschnitt der Innenwand zum Anliegen kommen. Ferner ist bei einem Öffnungswinkel der Drosselklappe aus der zweiten Sperrposition ein erwünschter Spalt zwischen der Drosselklappe und der ersten und zweiten Kurvenkontur ausgebildet. Die axiale Länge des Zylinderabschnitts kann in Abhängigkeit zu dem Drosselklappendurchmesser ausgebildet sein.

Vorzugsweise weist der Zylinderabschnitt einen zu der Rückseitenkante der Drosselklappen-Oberhälfte korrespondierenden ersten Anlagebereich und einen dem ersten Anlagebereich gegenüberliegenden zweiten Anlagebereich auf, der zu der Frontseitenkante der Drosselklappen-Unterhälfte korrespondiert. Dadurch kann die Drosselklappe mit einer Seitenkante gleichmäßig an der Innenwand anliegen, insbesondere mit der Rückseitenkante der Drosselklappen-Oberhälfte an dem ersten Anlagebereich des schrägen Zylinderabschnitts und mit der Frontseitenkante der Drosselklappen-Unterhälfte an dem zweiten Anlagebereich des schrägen Zylinderabschnitts.

Vorzugsweise weist die erste Kurvenkontur einen bei Nichtvorhandensein eines schrägen Zylinderabschnitts vollständig bzw. bei Vorhandensein eines schrägen Zylinderabschnitts teilweise zu der Frontseitenkante der Drosselklappen-Oberhälfte korrespondierenden Anlagebereich und die zweite Kurvenkontur einen zu der Rückseitenkante der Drosselklappen-Unterhälfte korrespondierenden Anlagebereich auf. Dadurch kann in der ersten Sperrposition ein besonders dichtes Verschließen des Kanals erreicht werden. Ferner kann ein feines Regulieren des Luftmassendurchsatzes durch ein geringes Öffnen der Drosselklappe aus der ersten Sperrposition ermöglicht werden.

Vorzugsweise ist die Drosselklappe kreisrund, zylindrisch und/oder plan ausgebildet. Dadurch kann die Herstellung und die Montage der Drosselklappe vereinfacht und Kosten gespart werden. Insbesondere kann die Drosselklappe 'seitenverkehrt' montiert werden. Zudem ist beim Schließen der Drosselklappe ein Verbeißen nahezu ausgeschlossen. Die zylindrisch ausgebildete Drosselklappe korrespondiert bevorzugt mit den in dem Kanal ausgebildeten geneigten Kurvenkonturen bzw. dem schrägen Zylinderabschnitt. Die Drosselklappe ist vorzugsweise über einen elektromotorischen Aktor betätigbar, woraus eine genaue Einstellbarkeit der Drosselklappe resultiert.

Vorzugsweise ist die Drosselklappe eine zylindrische Scheibe mit einer flächig bzw. plan ausgebildeten Frontseitenfläche, einer flächig bzw. plan ausgebildeten Rückseitenfläche und einer an einem radial äußeren Umfangsbereich umlaufenden Stirnseitenfläche, wobei die Stirnseitenfläche in Bezug auf die Frontseitenfläche und/oder die Rückseitenfläche senkrecht angeordnet ist. Die Frontseitenkante ist insbesondere zwischen der flächig ausgebildeten Frontseitenfläche und der Stirnseitenfläche der Drosselklappe ausgebildet, die Rückseitenkante zwischen der der Frontseitenfläche gegenüberliegenden ausgebildeten Rückseitenfläche und der Stirnseitenfläche. Dadurch weist die Drosselklappe jeweils eine über einen Winkel von im Wesentlichen 90° ausgebildete Frontseitenkante und Rückseitenkante auf. Dadurch kann die Drosselklappe mit den (Eck-) Kanten an der Innenwand des Drosselklappenstutzens zum Anliegen kommen.

Vorzugsweise ist die Drosselklappe in einem Radius von 170° drehbar. Begrenzt wird dieser Aktionsradius durch die erste Sperrposition und die zweite Sperrposition. Besonders bevorzugt ist die Drosselklappe aus der Offenposition (0°-Position) jeweils in die erste Sperrposition um etwa 80° drehbar und in die zweite Sperrposition um ca. -90° drehbar. Dadurch ergibt sich von der ersten Sperrposition über die Offenposition zur zweiten Sperrposition ein Gesamtarbeitswinkel von ca. 170°. Die Drosselklappe kann natürlich auch in jedem beliebigen anderen Winkel, beispielsweise zwischen 100° und 180°, positioniert bzw. arretiert werden.

Vorzugsweise sind die erste Kurvenkontur und/oder die zweite Kurvenkontur derart ausgebildet, dass der Durchströmungsquerschnitt bzw. ein Kanalinnendurchmesser über die Länge der Kurvenkontur gleich bzw. unverändert ist. Dadurch kann ein Luftdurchsatz in dem Kanal durch die Kurvenkontur im Wesentlich unbeeinflusst bleiben. Der Durchströmungsquerschnitt kann ein Querschnitt des durchströmbaren Kanalinnenraums senkrecht in Bezug auf die Kanalmittellinie sein. In Richtung der axialen Längserstreckung des Kanals bzw. in Bezug auf die Kanalmittellinie erstreckt sich die Kurvenkontur vorzugsweise über eine bestimmte Länge von, über die die Drosselklappe mit der Kurvenkontur in Kontakt gelangen kann. Durch die Kurvenkontur erfährt der Kanal einen Achsversatz, so dass die Drosselklappe bei Drehen in die erste Sperrposition gleichmäßig umlaufend an der Innenwand bzw. an den Kurvenkonturen zur Anlage kommt.

Vorzugsweise ist die Drosselklappe in der ersten Sperrposition schräg bzw. in einem Winkel α in Bezug auf die Kanalmittellinie und/oder Kanalhauptachse und in der zweiten Sperrposition im Wesentlichen senkrecht zu der Kanalmittellinie und/oder Kanalhauptachse angeordnet. Der Winkel α beträgt vorzugsweise 80°. Durch die schräge Anordnung der Drosselklappe in der ersten Sperrposition kann ein Verschluss des Kanals hergestellt werden, da eine definierte Wandberührung stattfindet. Bei Drehen der Drosselklappe aus der ersten Sperrposition in Richtung der Offenposition wird beim "Anheben" der Klappe aus der Anlageposition durch eine definierte Ausbildung der ersten und zweiten Kurvenkontur der Öffnungsquerschnitt verringert. Dies ist hinsichtlich eines minimalen Grundluftdurchsatzes besonders vorteilhaft, In der zweiten Sperrposition kann ein im Vergleich zur ersten Sperrposition größerer Luftspalt zwischen der Drosselklappe und der Innenwandfläche ausgebildet sein, so dass der Kanal nicht vollständig verschlossen ist, sondern ein Leckluftstrom an der Drosselklappe vorbei strömen kann. Dies kann für bestimmte Betriebszustände, beispielsweise einen Leerlauf der Brennkraftmaschine, besonders vorteilhaft sein.

Vorzugsweise ist die in Kanalrichtung verlaufende Kanalmittellinie zumindest in einem Mittenbereich des Drosselklappenstutzens, vorzugsweise in dem Zylinderabschnitt, eine Gerade, wobei der Mittelpunkt der Drosselklappe auf dieser Geraden liegt. Unter der Kanalmittellinie ist eine Achse oder Linie zu verstehen, die aus einer Aneinanderreihung der Mittelpunkte des Kanals bzw. der Innenwandfläche des Kanals gebildet ist. Die Kanalmittellinie kann insbesondere einen kurvigen Verlauf aufweisen. Hiervon zu unterscheiden ist eine Kanalhauptachse, die eine zwischen den Mittelpunkten der Einlassöffnung und der Auslassöffnung des Drosselklappenstutzens verlaufende Gerade ist.

Ein Ausführungsbeispiel eines erfindungsgemäßen Drosselklappenstutzens ist in den Figuren dargestellt und wird nachfolgend beschrieben.
Figur 1 zeigt eine schematische Schnittansicht eines erfindungsgemäßen Drosselklappenstutzens mit einer Drosselklappe in einer Offenposition,
Figur 2 zeigt eine schematische Schnittansicht des erfindungsgemäßen Drosselklappenstutzens mit einer Drosselklappe in einer ersten Sperrposition, und
Figur 3 zeigt eine schematische Schnittansicht des erfindungsgemäßen Drosselklappenstutzens mit einer Drosselklappe in der zweiten Sperrposition.

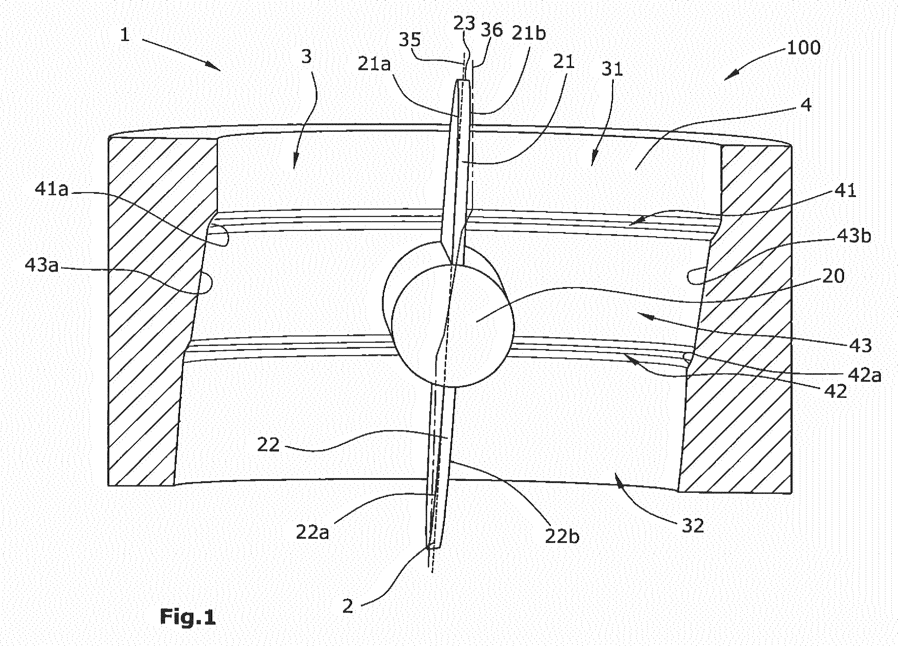

In den Figuren 1 bis 3 ist jeweils ein erfindungsgemäßer Drosselklappenstutzen 1 mit einem Kanal 3 und einer darin angeordneten Drosselklappe 2 gezeigt. Der Kanal 3 ist hierbei 'geschnitten' dargestellt, die Drosselklappe 2 'ungeschnitten'. Der Kanal 3 weist eine Einlassöffnung bzw. einen Einlasskanalabschnitt 31 und eine Auslassöffnung bzw. einen Auslasskanalabschnitt 32 auf und kann von einem Fluid durchströmt werden. Der Kanal 3 weist eine Kanalmittellinie 36 (Strich-Punkt-Linie), die eine Aneinanderreihung der Mittelpunkte des Kanal 3 ist, und eine Kanalhauptachse 35 (Punkt-Linie) auf, die eine Gerade zwischen dem Mittelpunkt der Einlassöffnung 31 und dem der Auslassöffnung 32 ist. Zur Regelung des durch den Kanal 3 strömenden Fluids, insbesondere eines Luftmassendurchsatzes, kann die Drosselklappe 2 in die in den Figuren 1 bis 3 gezeigten Stellpositionen 100, 101, 102 gedreht werden. Selbstverständlich kann die Drosselklappe 2 auch in weitere Stellpositionen zwischen der ersten Sperrposition 101 und der zweiten Sperrposition 102 einstellbar bzw. drehbar sein.

Die Drosselklappe 2 ist kreisrund, zylindrisch und plan ausgebildet und wird durch eine Drosselklappenwelle 20 in zwei gleich große Hälften 21, 22 geteilt. Die Hälften 21, 22 sind als eine in Richtung der Einlassöffnung 31 des Kanals 3 angeordnete Drosselklappen-Oberhälfte 21 und eine in Richtung der Auslassöffnung 32 des Kanals 3 angeordnete Drosselklappen-Unterhälfte 22 definiert. Die Drosselklappen-Oberhälfte 21 und die Drosselklappen-Unterhälfte 22 weisen jeweils eine Frontseitenkante 21a, 22a und eine Rückseitenkante 21b, 22b auf. Zwischen der Frontseitenkante 21a, 22a und der Rückseitenkante 21b, 22b ist eine umlaufende Stirnseitenfläche 23 ausgebildet.

Durch die Ausbildung einer kreisrunden und planen Drosselklappe 2 sowie einer hierzu an der Innenwandfläche 4 des Kanals 3 ausgebildeten korrespondierenden ersten Kurvenkontur 41 und einer korrespondierenden zweiten Kurvenkontur 42 sowie einem optional schrägem Zylinderabschnitt 43 können die Frontseitenkanten 21a, 22a und Rückseitenkanten 21b, 22b der Drosselklappe 2 über ihren Umfang gleichmäßig an der Innenwandfläche 4 zum Anliegen kommen. Insbesondere liegt die Drosselklappe 2 in der ersten Sperrposition 101 mit der Frontseitenkante 21a der Drosselklappen-Oberhälfte 21 an einer an der Innenwand 4 ausgebildeten ersten Kurvenkontur 41 sowie dem optional schrägem Zylinderabschnitt 43 und mit der Rückseitenkante 22b der Drosselklappen-Unterhälfte 22 an einer zweiten Kurvenkontur 42 sowie den optional schrägem Zylinderabschnitt 43 an, und in der zweiten Sperrposition 102 mit der Frontseitenkante 22a der Drosselklappen-Unterhälfte 22 und mit der Rückseitenkante 21b der Drosselklappen-Oberhälfte 21 an dem schrägen Zylinderabschnitt 43 bzw. bei optional Nichtvorhandensein des schrägen Zylinderabschnitts 43 an der jeweiligen ersten und zweiten Kurvenkontur an.

Bei Verwendung des Drosselklappenstutzens 1 zur Regelung einer Luftzufuhr einer nicht dargestellten Brennkraftmaschine ist stromaufwärts der Einlassöffnung 31 beispielsweise ein nicht dargestellter Verdichter, ein Abgasrückführkanal oder ein anderer Luftkanal angeordnet; stromabwärts der Auslassöffnung 32 kann der Drosselklappenstutzen 1 mit der nicht dargestellten Brennkraftmaschine verbunden sein. Die Regelung der Luftzufuhr über den erfindungsgemäßen Drosselklappenstutzen 1 erfolgt dabei in Abhängigkeit der Betriebszustände der Brennkraftmaschine.

In der Figur 1 befindet sich die Drosselklappe 2 in einer Offenposition 100, in die die Drosselklappe 2 für den Betriebszustand "Vollschub" der Brennkraftmaschine verfahren wird. Hierbei ist ein sehr großer Luftmassenstrom durch den Kanal 3 erwünscht. In der Offenposition 100 befinden sich die Drosselklappen-Oberhälfte 21 und die Drosselklappen-Unterhälfte 22 in der Kanalhauptachse 35 des Kanals 3, so dass eine Fluidströmung von der Einlassöffnung 31 zu der Auslassöffnung 32 vollständig freigegeben ist. Dadurch kann ein maximaler Luftmassendurchsatz bereitgestellt werden.

Durch ein Drehen der Drosselklappe 2 aus der Offenposition 100 in eine erste Drehrichtung 201 bzw. in Richtung der ersten Sperrposition 101 oder in eine zweite Drehrichtung 202 bzw. in Richtung der zweiten Sperrposition 102 kann der vom Kanal 3 durch die Auslassöffnung 32 ausströmende Luftstrom geregelt bzw. verringert werden.

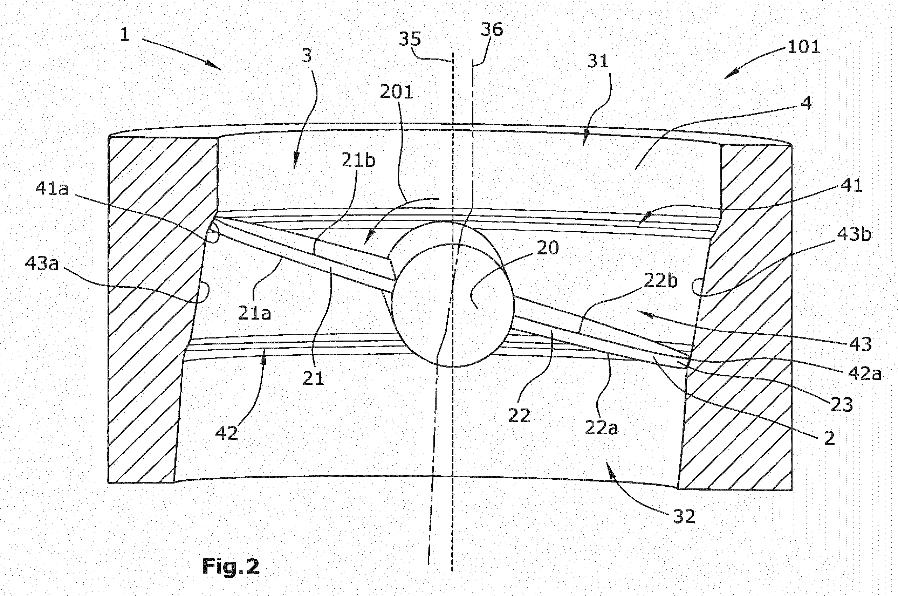

In der Figur 2 ist die Drosselklappe 2 in einer die Auslassöffnung 32 verschließenden ersten Sperrposition 101 dargestellt. Die Drosselklappe 2 liegt mit der Frontseitenkante 21a der Drosselklappen-Oberhälfte 21 an der ersten Kurvenkontur 41 sowie dem optional schrägem Zylinderabschnitt 43 und mit der Rückseitenkante 22b der Drosselklappen-Unterhälfte 22 an der zweiten Kurvenkontur 42 sowie den optional schrägem Zylinderabschnitt 43 an. Die erste Kurvenkontur 41 und die zweite Kurvenkontur 42 bilden jeweils eine an der Innenwand 4 des Kanals 3 kurvenförmig ausgebildete Anlagefläche 41a, 42a aus. Die erste Kurvenkontur 41 weist in diesem Beispiel den gleichen Kurvenradius wie die gegenüberliegende zweite Kurvenkontur 42 auf. Dadurch kann die Auslassöffnung 32 gegenüber der Einlassöffnung 31 möglichst vollständig verschlossen und eine fluidische Verbindung unterbrochen werden.

Die Drosselklappe 2 ist in der ersten Sperrposition 101 in Bezug auf die Kanalhauptachse 35 geneigt bzw. in einem Winkel α angeordnet. In Bezug auf die Kanalmittellinie 36 ist die Drosselklappe 2 in dieser Ausführung im Wesentlichen senkrecht angeordnet. Der Winkel α beträgt in diesem Beispiel ca. 85°. Die Drosselklappe liegt hierbei in Bezug auf die Längserstreckung der Kurvenkontur 41, 42 jeweils mittig an der Kurvenkontur 41, 42 an. Dadurch sind stromabwärtige Toträume in Strömungsrichtung unmittelbar hinter der Drosselklappe 2 minimiert, so dass Wirbel weitestgehend vermieden werden können und lediglich ein sehr geringer Druckverlust entsteht.

Bei einer Verschaltung des Drosselklappenstutzens 1 in einem Ansaugsystem eines nicht dargestellten Verbrennungsmotors kann in der ersten Sperrposition 101 nur sehr wenig Luft in den Auslasskanal bzw. Ansaugkanal gelangen, so dass ein Nachlaufen des Verbrennungsmotors durch ungewolltes Zünden nach dem Abstellen des Verbrennungsmotors zuverlässig verhindert werden kann.

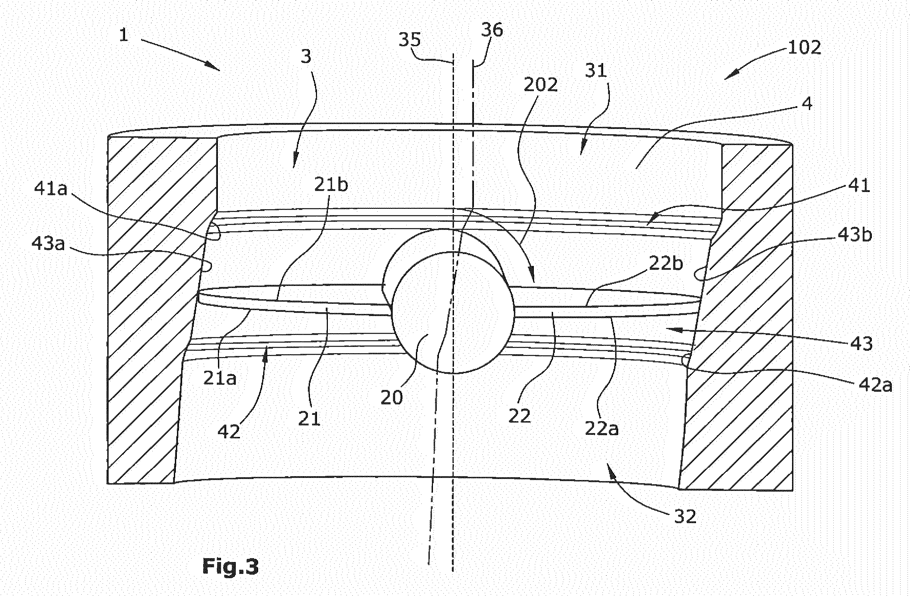

In der Figur 3 ist die Drosselklappe 2 in einer die Einlassöffnung 31 verschließenden zweiten Sperrposition 102 gezeigt. Die Drosselklappe 2 liegt hierbei mit ihren im Vergleich zu der ersten Sperrposition 101 entgegengesetzten Seitenkanten, nämlich mit der Frontseitenkante 22a der Drosselklappen-Unterhälfte 22 und mit der Rückseitenkante 21b der Drosselklappen-Oberhälfte 21 an dem schrägem Zylinderabschnitt 43 oder optional bei Nichtvorhandensein des schrägen Zylinderabschnitts 43 an der jeweiligen ersten und zweiten Kurvenkontur an. In der zweiten Sperrposition 102 ist die Auslassöffnung 32 gegenüber der Einlassöffnung 31 zumindest weitgehend verschlossen, so dass lediglich eine minimale fluidische Verbindung zwischen der Einlassöffnung 31 und der Auslassöffnung 32 besteht.

In der zweiten Sperrposition 102 ist die Drosselklappe 2 in der gezeigten Ausführung im Wesentlichen senkrecht zu der Kanalhauptachse 35 angeordnet. Da die Drosselklappe 2 bei der Montage vorteilhafterweise in der ersten Sperrposition 101 mit der Drosselklappenwelle 20 fest fixiert wird und dadurch vorhandene Positionstoleranzen zwischen Anlagefläche 43, erster Kurvenkontur 41 bzw. zweiter Kurvenkontur 42 des Kanals 3 und der Drosselklappenwelle 20 eliminiert werden, ist die erste Sperrposition 101 dichter als die zweite Sperrposition 102.

In der zweiten Sperrposition 102 kann daher ein größerer Leckluftspalt zwischen der Drosselklappe 2 und der Kurvenkonturen 41, 42 bzw. dem Zylinderabschnitt 43 vorliegen als in der ersten Sperrposition 101. Dadurch ist In der zweiten Sperrposition 102 ein minimaler Luftstrom von der Einlassöffnung 31 zu der Auslassöffnung 32 freigegeben. Die zweite Sperrposition 102 eignet sich daher beispielsweise für einen Leerlaufbetrieb der Brennkraftmaschine, bei dem ein minimaler Luftstrom erwünscht ist. Ferner kann hierbei der Luftmassendurchsatz durch den Kanal 3 durch ein geringes Verdrehen der Drosselklappe 2 fein reguliert werden.

Es sollte deutlich sein, dass die Drosselklappe 2 auch in jede beliebige andere Stellposition zwischen der ersten Sperrposition 101 und der zweiten Stellposition 102 einstellbar ist. Insbesondere kann die Drosselklappe 2 in Abhängigkeit einer gewünschten Luftmenge und/oder eines gewünschten Luft-Mischungsverhältnisses in eine bestimmte Stellposition gedreht werden.

Die Bearbeitung des Kanals 3 kann auf bekannte Weise durch eine Spindel oder Fräsbearbeitung erfolgen. In bestimmten Anwendungsfällen kann es gewünscht sein, den Leckluftdurchsatz noch weiter zu minimieren. Hierzu können die erste Kurvenkontur 41, die zweite Kurvenkontur 42 und der Zylinderabschnitt 43 durch plastische Verformung nach Energiezufuhr den jeweiligen Frontseitenkanten 21a, 22a und/oder Rückseitenkanten 21b, 22b der Drosselklappe 2 angepasst sein. Dabei kann die Drosselklappe 2 durch Drehen der Drosselklappenwelle 20 mit einem vorgegebenen Drehmoment in Richtung einer der Sperrpositionen 101, 102 auch "zum Eingraben" gebracht werden,

Der erfindungsgemäße Drosselklappenstutzen verbindet entsprechend verschiedene Funktionen unterschiedlicher in bekannten Brennkraftmaschinen angeordneter Drosselklappensysteme in nur einer einzigen Drosselklappe. Beispielsweise verbindet der Drosselklappenstutzen die Funktionen einer sehr dicht verschließenden und fein regulierbaren Drosselklappe in der ersten Sperrposition und einer weniger dicht schließenden und grob regulierbaren Drosselklappe in der zweiten Sperrposition. Entsprechend entsteht ein Aufbau mit einer verringerten Anzahl an Bauteilen, wodurch der Herstellungs- und der Montageaufwand reduziert werden.

Referenzliste
- 1: Drosselklappenstutzen
- 2: Drosselklappe
- 20: Drosselklappenwelle
- 21: Drosselklappen-Oberhälfte
- 21a: Frontseitenkante
- 21b: Rückseitenkante
- 22: Drosselklappen-Unterhälfte
- 22a: Frontseitenkante
- 22b: Rückseitenkante
- 23: Stirnseitenfläche
- 3: Kanal
- 31: Einlasskanalabschnitt
- 32: Auslasskanalabschnitt
- 35: Kanalhauptachse
- 36: Kanalmittellinie, Mittellinie des Kanals
- 4: Innenwandfläche
- 41: erste Kurvenkontur
- 41a: Anlagebereich der ersten Kurvenkontur
- 42: zweite Kurvenkontur
- 42a: Anlagebereich der zweiten Kurvenkontur
- 43: Zylinderabschnitt
- 43a: erster Anlagebereich des Zylinderabschnitts
- 43b: zweiter Anlagebereich des Zylinderabschnitts

- 100: Offen position
- 101: erste Sperrposition
- 102: zweite Sperrposition

- 201: erste Drehrichtung
- 202: zweite Drehrichtung

## Patentansprüche

1. Drosselklappenstutzen (1) für eine Brennkraftmaschine mit einem durchströmbaren Kanal (3) und einer in dem Kanal (3) angeordneten Drosselklappe (2), die mit einer in dem Kanal (3) mittig angeordneten Drosselklappenwelle (20) zentrisch verbunden ist und in einer ersten Drehrichtung (201) in eine den Kanal (3) verschließende erste Sperrposition (101) drehbar ist, wobei an einer Innenwand (4) des Kanals (3) eine erste Kurvenkontur (41) und eine zweite Kurvenkontur (42) ausgebildet sind, an denen die Drosselklappe (2) in der ersten Sperrposition (101) anliegt, und die Drosselklappe (2) in einer zur ersten Drehrichtung (201) entgegengesetzten zweiten Drehrichtung (202) in eine den Kanal (3) verschließende zweite Sperrposition (102) drehbar ist **dadurch gekennzeichnet, dass** zwischen der ersten Kurvenkontur (41) und der zweiten Kurvenkontur (42) an der Innenwand (4) ein Zylinderabschnitt (43) ausgebildet ist, der in Bezug auf eine Kanalhauptachse (35) schräg ausgebildet ist.

2. Drosselklappenstutzen (1) nach Anspruch 1, **dadurch gekennzeichnet, dass** die erste Kurvenkontur (41) in einem Einlasskanalabschnitt (31) und die zweite Kurvenkontur (42) in einem Auslasskanalabschnitt (32) angeordnet sind.

3. Drosselklappenstutzen (1) nach einem der Ansprüche 1 oder 2, **dadurch gekennzeichnet, dass** die Drosselklappe (2) in der ersten Sperrposition (101) und in der zweiten Sperrposition (102) an der ersten Kurvenkontur (41) und an der zweiten Kurvenkontur (42) anliegt.

4. Drosselklappenstutzen (1) nach einem der Ansprüche 1 oder 2, **dadurch gekennzeichnet, dass** die Drosselklappe (2) in der zweiten Sperrposition (102) an dem Zylinderabschnitt (43) anliegt.

5. Drosselklappenstutzen (1) nach einem der voranstehenden Ansprüche, **dadurch gekennzeichnet, dass** der Zylinderabschnitt (43) in Längserstreckung des Kanals (3) über eine Länge von 1 bis 10mm ausgebildet ist.

6. Drosselklappenstutzen (1) nach einem der voranstehenden Ansprüche, **dadurch gekennzeichnet, dass** der Zylinderabschnitt (43) einen zu einer Rückseitenkante (21b) einer Drosselklappen-Oberhälfte (21) korrespondierenden ersten Anlagebereich (43a) und einen dem ersten Anlagebereich (43a) gegenüberliegenden zu einer Frontseitenkante (22a) einer Drosselklappen-Unterhälfte (22) korrespondierenden zweiten Anlagebereich (43b) aufweist.

7. Drosselklappenstutzen (1) nach einem der voranstehenden Ansprüche, **dadurch gekennzeichnet, dass** die erste Kurvenkontur (41) einen zu einer Frontseitenkante (21a) einer Drosselklappen-Oberhälfte (21) korrespondierenden Anlagebereich (41a) und die zweite Kurvenkontur (42) einen zu einer Rückseitenkante (22b) einer Drosselklappen-Unterhälfte (22) korrespondierenden Anlagebereich (42a) aufweist.

8. Drosselklappenstutzen (1) nach einem der voranstehenden Ansprüche, **dadurch gekennzeichnet, dass** die Drosselklappe (2) kreisrund, zylindrisch und/oder plan ausgebildet ist.

9. Drosselklappenstutzen (1) nach einem der voranstehenden Ansprüche, **dadurch gekennzeichnet, dass** die Drosselklappe (2) als eine zylindrische Scheibe mit einer planen Frontseitenfläche, einer planen Rückseitenfläche und einer umlaufenden Stirnseitenfläche (23) ausgebildet ist, wobei die Stirnseitenfläche (23) in Bezug auf die Frontseitenfläche und/oder auf die Rückseitenfläche senkrecht ausgebildet ist.

10. Drosselklappenstutzen (1) nach einem der voranstehenden Ansprüche, **dadurch gekennzeichnet, dass** die Drosselklappe (2) in einem Radius von 170° drehbar ist.

11. Drosselklappenstutzen (1) nach einem der voranstehenden Ansprüche, **dadurch gekennzeichnet, dass** die Innenwand (4) zumindest in einem Bereich der ersten Kurvenkontur (41) und/oder der zweiten Kurvenkontur (42) derart ausgebildet ist, dass ein Durchströmungsquerschnitt über die Länge des Bereichs unverändert ist.

## Claims

1. Throttle valve body (1) for an internal combustion engine, comprising a through-flow channel (3) and a throttle valve (2) arranged in the channel (3), the throttle valve being centrically connected to a throttle valve shaft (20) arranged in the channel (3) and being adapted to be rotated in a first sense of rotation (201) to a first blocking position (101) closing the channel (3), wherein a first curve contour (41) and a second curve contour (42) are formed on an inner wall (4) of the channel (3), against which the throttle valve (2) abuts in the first blocking position (101), and wherein the throttle valve (2) is adapted to be turned in a second sense of rotation (202) opposite to the first sense of rotation (201) to a second blocking position (102) closing the channel (3), **characterized in that**, between the first curve contour (41) and the second curve contour (42), a cylindrical section (43) is formed on the inner wall (4), which is inclined with respect to a main axis (35) of the channel.

2. Throttle valve body (1) of claim 1, **characterized in that** the first curve contour (41) is arranged in an inlet channel section (31) and the second curve contour (42) is arranged in an outlet channel section (32).

3. Throttle valve body (1) of one of claims 1 or 2, **characterized in that**, in the first blocking position (101) and in the second blocking position (102), the throttle valve (2) abuts against the first curve contour (41) and the second curve contour (42), respectively.

4. Throttle valve body (1) of one of claims 1 or 2, **characterized in that**, in the second blocking position (102), the throttle valve (2) abuts against the cylindrical section (43).

5. Throttle valve body (1) of one of the preceding claims, **characterized in that** the cylindrical section (43) is formed for a length of 1 to 10 mm in the longitudinal direction of the channel (3).

6. Throttle valve body (1) of one of the preceding claims, **characterized in that** the cylindrical section (43) comprises a first abutment region (43a) corresponding to a rear side edge (21b) of a throttle valve upper half (21) and a second abutment region (43b) opposite the first abutment region (45a) and corresponding to a front side edge (22a) of a throttle valve lower half (22).

7. Throttle valve body (1) of one of the preceding claims, **characterized in that** the first curve contour (41) comprises a first abutment region (41a) corresponding to a front side edge (21a) of a throttle valve upper half (21) and the second curve contour (42) comprises a second abutment region (42a) corresponding to a rear side edge (22b) of a throttle valve lower half (22).

8. Throttle valve body (1) of one of the preceding claims, **characterized in that** the throttle valve (2) is circular, cylindrical and/or planar in shape.

9. Throttle valve body (1) of one of the preceding claims, **characterized in that** the throttle valve (2) is designed as a cylindrical disc having a planar front side surface, a planar rear side surface and a circumferential end surface (23), wherein the end surface (23) is designed to be perpendicular relative to the front side surface and/or the rear side surface.

10. Throttle valve body (1) of one of the preceding claims, **characterized in that** the throttle valve (2) can be turned over a radius of 170°.

11. Throttle valve body (1) of one of the preceding claims, **characterized in that**, at least in a region of the first curve contour (41) and/or the second curve contour (42), the inner wall (4) is formed such that a flow cross section is unchanged for the length of that region.

## Revendications

1. Tubulure de papillon (1) pour un moteur à combustion interne avec un canal (3) apte à être traversé et un papillon (2) disposé dans le canal (3), le papillon étant lié de manière centrique à un arbre de papillon (20) centré dans le canal (3) et apte à être tourné dans un premier sens de rotation (201) dans une première position de blocage (101) fermant ledit canal (3), un premier contour courbé (41) et un deuxième contour courbé (42) étant formé sur le paroi intérieur (4) du canal (3), ledit papillon (2) s'appuyant sur les contours dans la première position de blocage (101), et le papillon (2) étant apte à être tourné dans un deuxième sens de rotation (202) opposé au premier sens de rotation (201) dans une deuxième position de blocage (102) fermant ledit canal (3), **caractérisée en ce qu'**une section cylindrique (43) est fermée sur le paroi intérieur (4) entre le premier contour courbé (41) et le deuxième contour courbé (42), la section étant inclinée par rapport à un axe principal (35) du canal.

2. Tubulure de papillon (1) selon la revendication 1, **caractérisée en ce que** le premier contour courbé (41) est disposé dans une section d'un canal d'admission (31) et le deuxième contour courbé (42) est disposé dans une section de canal de sortie (32).

3. Tubulure de papillon (1) selon l'une quelconque des revendications 1 ou 2, **caractérisée en ce que**, dans la première position de blocage (101) et dans la deuxième position de blocage (102), le papillon (2) s'appui sur le premier contour courbé (41) et sur le deuxième contour courbé (42).

4. Tubulure de papillon (1) selon l'une quelconque des revendications 1 ou 2, **caractérisée en ce que**, dans la deuxième position de blocage (102) le papillon (2) s'appui sur la section cylindrique (43).

5. Tubulure de papillon (1) selon l'une quelconque des revendications précédentes, **caractérisée en ce que** la section cylindrique (43) est formée pour une longueur de 1 à 10 mm dans la direction longitudinale du canal (3).

6. Tubulure de papillon (1) selon l'une quelconque des revendications précédentes, **caractérisée en ce que** la section cylindrique (43) comprend une première région d'appui (43a) correspondant à un bord de face arrière (21b) d'une moitié supérieure (21) du papillon, et une deuxième région d'appui (43b), opposée à la première région d'appui (43a), correspondant à un bord de face de front (22a) d'une moitié inférieure (22) du papillon.

7. Tubulure de papillon (1) selon l'une quelconque des revendications précédentes, **caractérisée en ce que** le premier contour courbé (41) comprend une région d'appui (41a) correspondant à un bord de face de front (21a) d'une moitié supérieure (21) du papillon, et le deuxième contour courbé (42) comprend une région d'appui (42a) correspondant à un bord de face arrière (22b) d'une moitié inférieure (22) du papillon.

8. Tubulure de papillon (1) selon l'une quelconque des revendications précédentes, **caractérisée en ce que** le papillon (2) est circulaire, cylindrique et/ou plan.

9. Tubulure de papillon (1) selon l'une quelconque des revendications précédentes, **caractérisée en ce que** le papillon (2) est réalisée sous forme d'un disque cylindrique avec une face de front, une face arrière plane et une face avant (23) circonférentielle, ladite face avant (23) étant perpendiculaire par rapport à la face de front et/ou la face arrière.

10. Tubulure de papillon (1) selon l'une quelconque des revendications précédentes, **caractérisée en ce que** le papillon (2) pet être tourné sur un rayon de 170°.

11. Tubulure de papillon (1) selon l'une quelconque des revendications précédentes, **caractérisée en ce qu'**au moins dans une région du premier contour courbé (41) et/ou du deuxième contour courbé (42), le paroi intérieur (4) est formé de sorte qu'une section transversale d'écoulement n'est pas changée sur la longueur de la région.
